# EUROPEAN PATENT APPLICATION

(11) **EP 4 480 354 A1**
(43) Date of publication of application: **25.12.2024**
(21) Application number: 24183821.8
(22) Date of filing: 21.06.2024
(51) Int. Cl.: A47G 21/06, B25B 7/14, B26B 13/16, A22C 29/04

(54) **MULTIPURPOSE DEVICE FOR OPENING SHELLS AND PROCESSING FISH OR OTHER FOODS**

(30) Priority: 23.06.2023 IT 202300013017
(71) Applicant: Cicchini, Gianluca, 63811 Sant'Elpidio a Mare (IT)
(72) Inventor: Cicchini, Gianluca, 63811 Sant'Elpidio a Mare (IT)
(74) Representative: Baldi, Claudio

(57) **Abstract**

A multipurpose device (100) for the opening of shells and for other processing operations; the device (100) comprises a first lever (1) and a second lever (2) hinged in a scissor-like manner with respect to a pin (5) having a hinging axis (X5) and lying on two parallel planes orthogonal to the hinging axis in such a way to be disposed in a compact position, wherein the two levers are superimposed on each other; the device (100) further comprises two blades (3, 4) that are connected to the two levers (1, 2) and lie on two parallel planes orthogonal to the hinging axis (X5), in such a way that, when the two levers (1, 2) are in compact position and superimposed on each other, also the two blades (3,4) are superimposed on each other; the device (100) further comprises an elastic element (7) disposed between the first lever (1) and the second lever (2), in such a way to constantly push the two levers (1, 2) into a divaricated position.

## Description

The present patent application for industrial invention relates to a multipurpose device for the opening of shells and for the processing of fish or other foods.

As it is known, a device for the opening of shells comprises an ogival or triangular-shaped blade attached to the end of a handle. Such a device requires a relatively difficult manual operation, which consists in inserting the blade between the two vales of the shell, levering between them, and finally completing the opening operation using the hands and the device simultaneously.

Given the difficulty of the operation, the device may break one of the valves and may even injure the hand of the user who is holding the shell, especially in the case of an inexperienced user.

In order to overcome the aforementioned drawbacks, new devices for the openings of shells have been devised over time, which comprise two levers pivoted together by means of a pin, each lever being formed by a power arm and a resistance arm. The two levers are arranged side by side and can be alternately disposed in:
- a first position, wherein the power arms are moved apart and the resistance arms are moved closer; and
- a second position, wherein the power arms are moved closer and the resistance arms are moved apart.

Two blades are disposed on the two resistance arms, substantially lying on parallel planes or on planes passing through the hinging axis whereon the two levers are pivoted. When the levers are in the first position, the blades are in contact with each other, whereas when the levers are in the second position, the blades are moved apart from each other.

In order to open a shell with the aforementioned devices according to the prior art, it is necessary to keep the levers in the first position in order to insert the blades joined together between the valves of the shell.

Then the user presses the two power arms so as to divaricate the blades and open the shell.

However, such devices are impaired by several drawbacks.

Firstly, the user must exert a considerable force on the power arms in order to separate the valves and open the shell.

Moreover, after numerous uses, the blades can get damaged, chipped, or bent, making the aforementioned devices for the opening of shells inefficient and inadequate.

It should also be pointed out that such devices are not versatile because they cannot be used for purposes other than those for which they were designed. Otherwise said, said devices can only be used to open shells.

Finally, such devices are cumbersome when they are not used.

US4150484A and GB518175A describe two shears provided with levers lying on the same plane and disposed side by side when they are in compact position.

The purpose of the present invention is to overcome the drawbacks of the prior art by devising a device for the opening of shells that is robust, effective, reliable, and practical to use.

Another purpose of the present invention is to devise a device for the opening of shells that can be disposed in a compact, space-saving position.

A further purpose of the present invention is to devise a device for the opening of shells that is versatile, meaning that it can also be used to perform other processing operations on fish or other foods.

These purposes are achieved in accordance with the invention with the features listed in the attached independent claim 1.

Advantageous achievements appear from the dependent claims.

The device according to the invention is defined by claim 1.

For the sake of explanatory clarity, the description of the device according to the invention continues with reference to the attached drawings, which are for illustrative and non-limiting purposes only, wherein:
Figs. 1 and 2 are two axonometric views of the device according to the invention in compact position seen from two different angles;
Fig. 3 is an axonometric view of the device according to the invention in divaricated position;
Figs. 4 and 5 are a front view of the device according to the invention in compact position and in divaricated position, respectively;
Figs. 6 and 7 are two axonometric views of a first lever and of a first blade of the device according to the invention, seen from two different angles;
Fig. 6A is an enlargement of the detail enclosed in circle "A" of Fig. 6;
Fig. 8 and 9 are two axonometric views of a second lever and of a second blade of the device according to the invention, seen from two different angles;
Fig. 10 is an exploded axonometric view illustrating the parts of the first lever;
Fig. 11 is an exploded axonometric view illustrating the parts of the second lever;
Figs. 12, 12A and 12B are diagrammatic views of the way in which the device according to the invention is used to open a shell.

With reference to the attached figures, a multipurpose device for the opening of shells according to the invention, which is generally denoted with reference numeral "100", is described below.

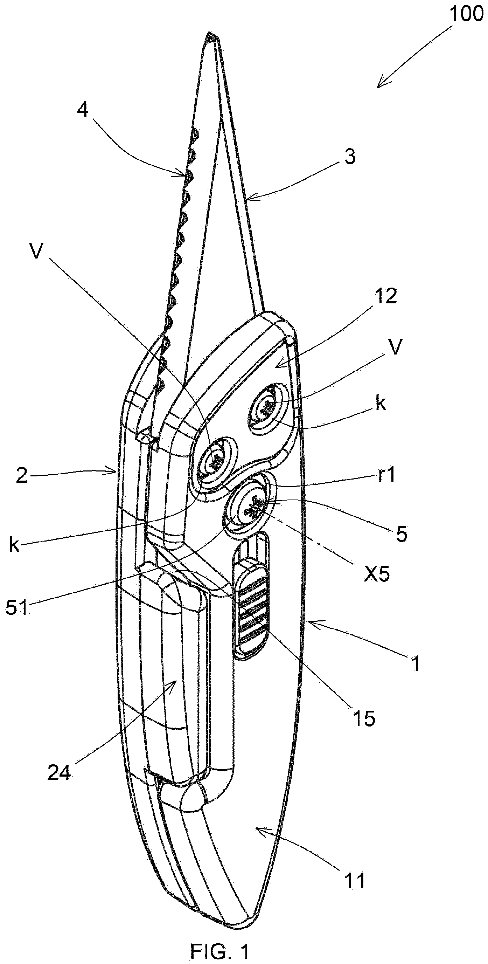

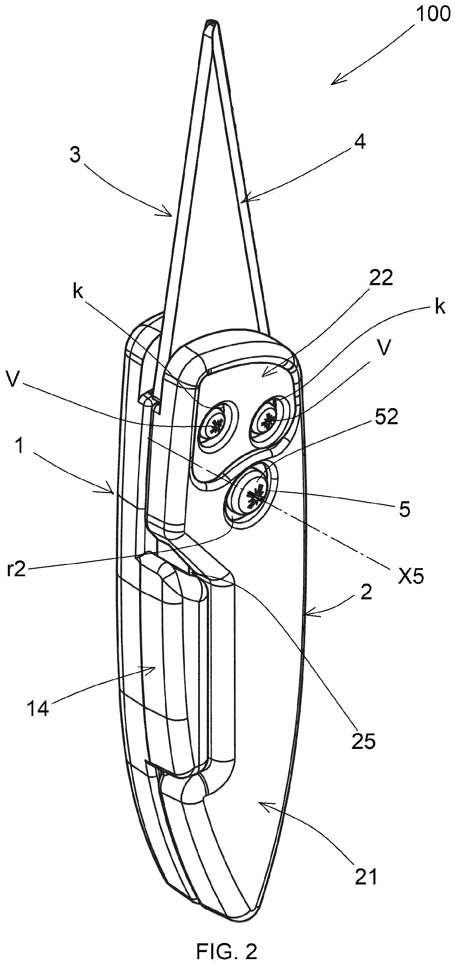

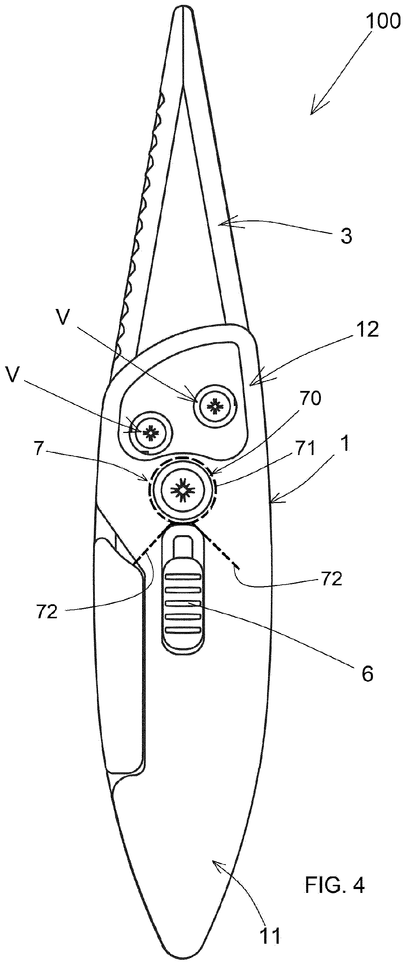

With reference to Figs. 1-5, the multipurpose device (100) comprises a first lever (1) and a second lever (2) hinged in a scissor-like manner with respect to a pin (5) with hinging axis (X5). The pin (5) is disposed at an intermediate position between the ends of each lever (1, 2) so that each lever (1, 2) has two shaped portions protruding in two opposite directions with respect to the pin (5).

Specifically, said shaped portions comprise a first portion, which is defined as power arm (11, 21) and acts as a handle, and a second portion, which is defined as resistance arm (12, 22).

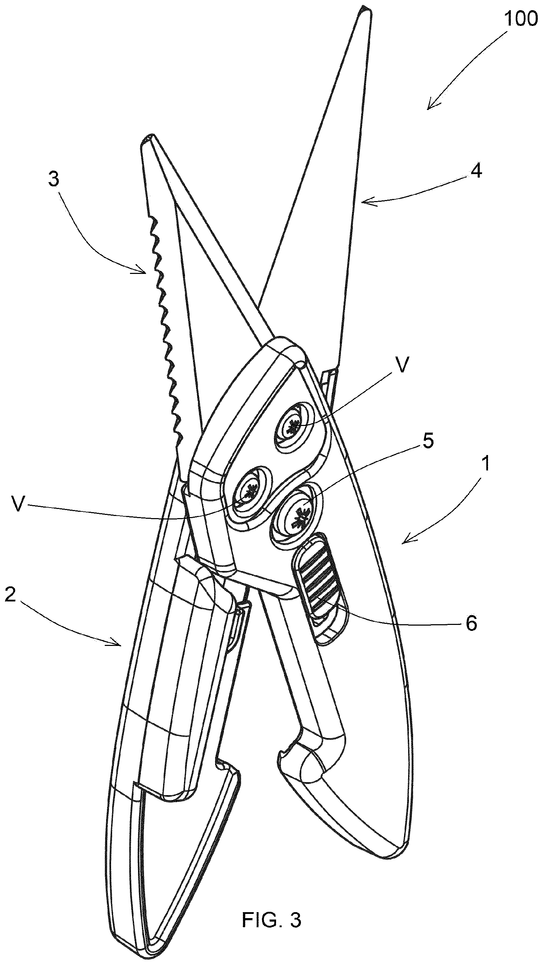

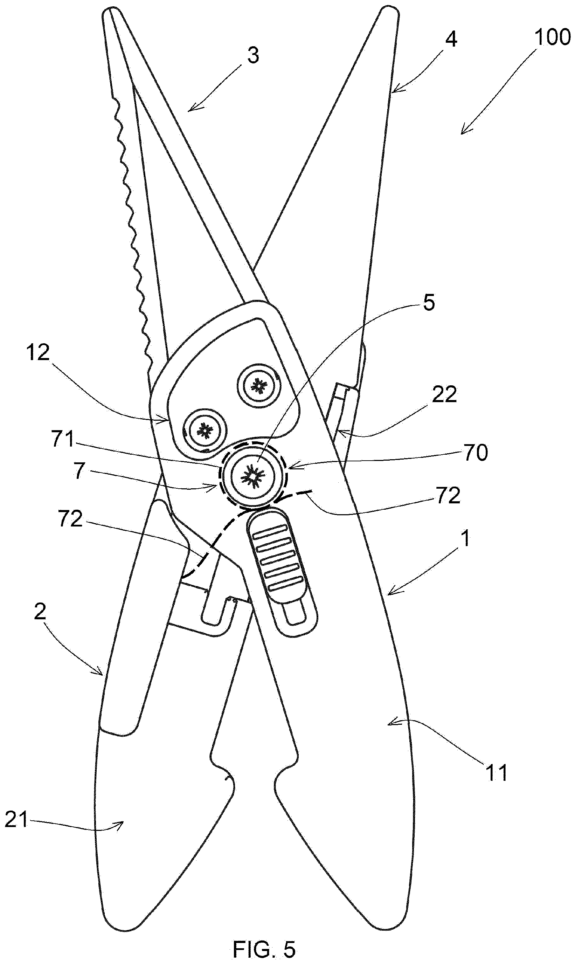

The two levers (1, 2) lie on planes parallel to each other and orthogonal to the hinging axis (X5), so that they can be alternately disposed in a compact position shown in Figs. 1, 2 and 4, wherein the two levers (1, 2) are superimposed on each other, and in a divaricated position shown in Figs. 3 and 5, wherein the two levers (1, 2) are crossed.

An elastic element (7) is arranged between the first lever (1) and the second lever (2) so as to constantly push the two levers (1, 2) into the divaricated position.

By way of example, the elastic element (7) comprises a torsion spring (70), which is diagrammatically shown in Fig. 5 with a broken line, comprising a central section (71) surrounding the pin (5) and two end sections (72) acting on the two levers (1, 2).

The device (100) also comprises a first blade (3) connected to the resistance arm (12) of the first lever (1), and a second blade (4) connected to the resistance arm (22) of the second lever (2). The two blades (3, 4) are made of metal material, such as stainless steel. The two blades (3, 4) also lie on two planes parallel to each other and orthogonal to the hinging axis (X5), respectively. Specifically, the first blade (3) lies on the same plane as the first lever (1), whereas the second blade (4) lies on the same plane as the second lever (2).

With reference to Figs. 3 and 5, when the levers (1, 2) are in divaricated position, the two blades (3, 4) are moved apart from each other.

With reference to Figs. 1, 2 and 4, on the other hand, when the levers (1. 2) are in compact position and superimposed on each other, also the two blades (3,4) are superimposed on each other.

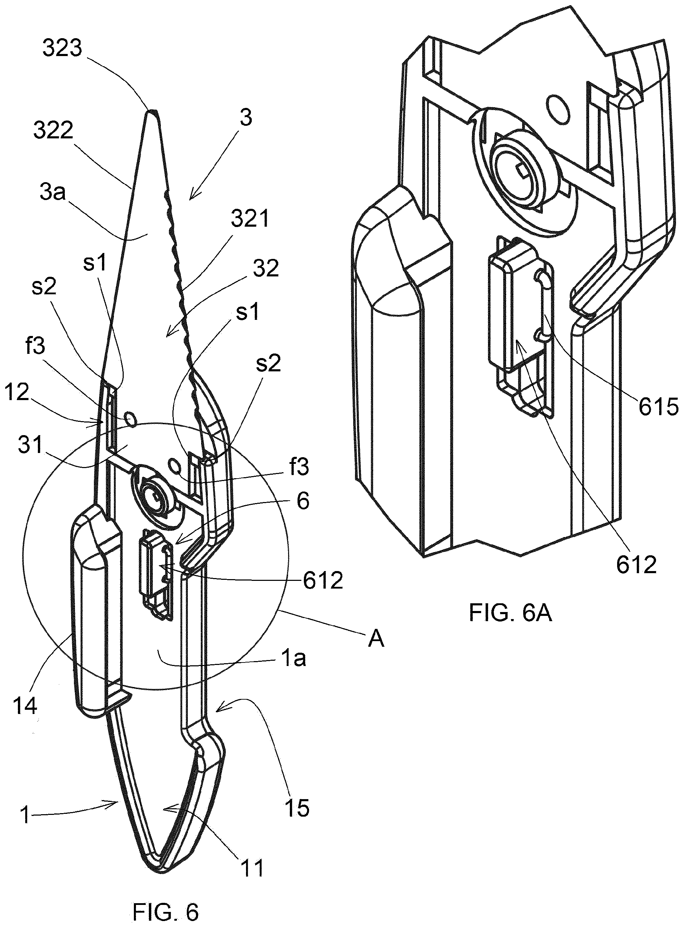

With reference to Figs. 6, 7, 8 and 9, each lever (1, 2) comprises an inner face (1a; 2a) facing the other lever (1, 2), and an outer face (1b, 2b) facing the opposite direction.

Each blade (3, 4) comprises an inner face (3a, 4a) facing the other blade (3, 4) and an outer face (3b, 4b) facing the opposite direction.

When the levers (1, 2) are moved from the divaricated position to the compact position and vice versa, the inner faces (1a, 2a) of the two levers (1, 2) slide in mutual contact, and the inner faces (3a, 4a) of the two blades (3, 4) slide in mutual contact.

The outer faces (1b, 2b) of the two levers (1, 2) are shaped in such a way as to be ergonomic and allow a user to hold the two levers (1, 2) with one hand.

As shown in Figs. 1, 2 and 3, the two levers (1, 2) have a specular profile, and also the two blades (3, 4) have a specular profile. In view of the above, when the levers (1, 2) are in compact position, the two levers (1, 2) basically form a single handle, whereas the two blades (3, 4) form a single blade similar to a knife blade.

Otherwise said, when the two levers (1, 2) are in compact position, the device (100) has a shape similar to that of an ordinary knife.

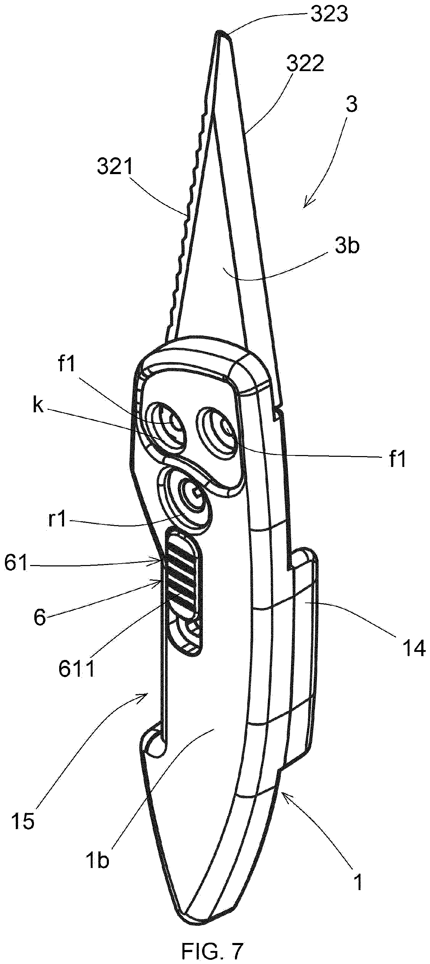

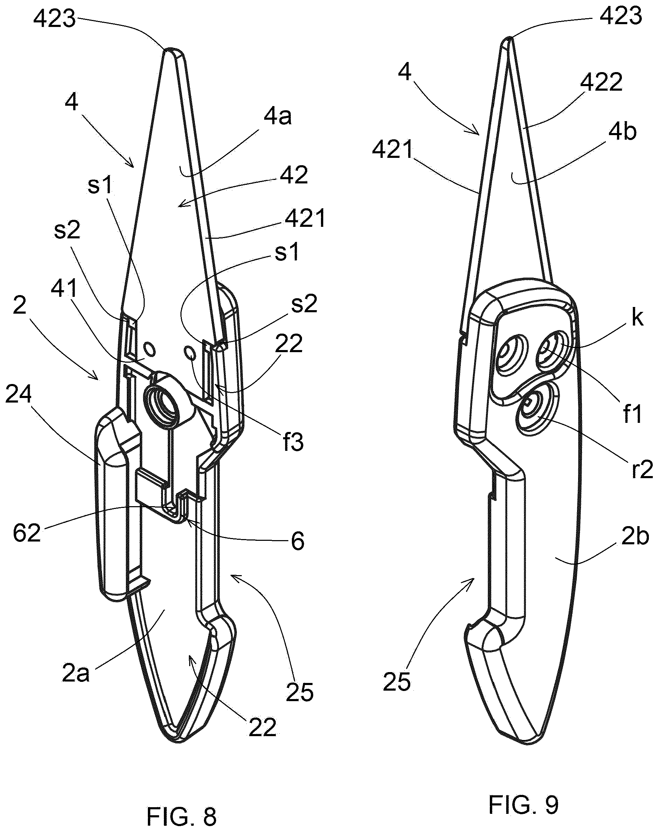

With reference to Figs. 1, 2, 3 and 4, the pin (5) may have different shapes, sizes and operating modes, but it preferably comprises at least one substantially cylindrical element, particularly a screw (51) and a threaded bushing (52) that are screwed together and, by way of example, have a head provided with a cross-shaped notch, in order to join the levers (1, 2) in a removable manner. The pin (5) is inserted into holes formed in the two levers (1, 2). The heads of the screw and of the threaded bushing are accommodated in low-relief seats (r1, r2) (shown in Figs. 7 and 9) formed on the outer faces (1b, 2b) of the two levers (1, 2).

With reference to Figs. 6, 7, 6A, 8, and 9, advantageously, said device (100) further comprises locking means (6) configured in such a way as to lock the levers (1, 2) in compact position.

The locking means (6) comprise:
- a slider (61) slidably inserted into a through opening (A1; A2, A3) provided on the first lever (1); and
- a niche (62) disposed on the inner face (2a) of the second lever (2) and cooperating with the slider (61).

In particular, the slider (61) comprises an actuation portion (611) protruding from the outer face (1b) of the first lever (1) and a tooth (612) protruding from the inner face (1a) of the first lever (1).

The actuation portion (611) and the tooth (612) are made in two separate pieces that can be coupled together by means of interlocking means, such as pegs and holes provided on the actuation portion (611) and on the tooth (612).

Referring to Fig. 6A, the tooth (612) comprises a lateral protruding member (615) consisting of a U-shaped handle, which is suitable for sliding in contact with the inner face (1a) of the first lever (1) in such a way that the slider (61) cannot come out of the opening (A1, A2, A3) in a direction going from the inner face (1a) to the outer face (1b).

The slider (61) can be moved between a disengaged or raised position (shown in Fig. 5), wherein the tooth (612) is disengaged from the niche (62), and an engaged or lowered position (shown in Fig. 1), wherein the tooth (612) is suitable for being inserted into the niche (62), preventing the mutual movement of the two levers (1, 2).

In order to move the slider (61), the user can place his or her finger on the actuation portion (611) and push the slider (61) in order to slide it along the opening (A1, A2, A3).

Preferably, the actuation portion (611) comprises a knurled or non-slip surface to favor the adhesion of the user's finger onto the actuation portion (611).

So, in order to lock the levers (1, 2) in compact position, the user must first close the two levers (1, 2) and then slide the slider (61) into the locking position so that the tooth (612) of said slider (61) is inserted into the niche (62).

To release the two levers (1,2) from the compact position, the user will have to slide the slider (61) into the disengaged position so that the tooth (612) of the slider (61) is disengaged from the niche (62). When the levers are disengaged (1, 2) and the user does not tighten the levers (1, 2), the levers (1, 2) will be elastically divaricated under the pushing action of the elastic element (7).

Although it is not shown in the appended figures, in a preferred embodiment of the invention, the device (100) may also comprise a spring that constantly pushes the slider (61) into the locking position.

The spring acts as a safety catch when the levers are in compact position and the user accidentally touches the slider (61). In fact, if the user does not apply enough force on the slider (61) to overcome the resistance of the spring, the slider (61) will remain in the locking position, keeping the two levers (1, 2) in compact position.

With reference to Figs. 6, 7, 8, and 9, each blade (3, 4) comprises an connection portion (31, 41) that is arranged on the resistance arm (12, 22) of the lever (1, 2), and a tip (32, 42) that protrudes from the resistance arm (12, 22) of the lever (1, 2) and has two lateral borders (321, 322; 421, 422) that converge with each other, moving away from the resistance arm (12, 22), and define an end vertex (323, 423) of the tip (32, 42) of the blade (3, 4).

Preferably, one of said side edges of the tip of one of the two blades has a sawtooth profile.

The tip (32, 42) of each blade (3, 4) tapers toward the side edges.

Specifically, in the embodiment shown in the attached figures, one of the two lateral borders (321) of the tip (32) of the first blade (3) has a sawtooth profile.

Due to said sawtooth profile, the device (100) can be advantageously used to scrape off the scales of a fish.

In such a case, the user locks the device (100) in compact position, holding it in the manner of a knife, and then scrapes off the skin of the fish by using the sawtooth-shaped lateral border (321) so as to remove the scales of the fish.

The device (100) also comprises removable connection means (s1, s2, V) that are arranged between the blades (3, 4) and the resistance arms (12, 22) of the levers (1, 2) and removably connect the blades (3, 4) to the resistance arms (12, 22).

Said removable connection means (s1, s2, V) act specifically on the connection portion (31, 41) of the blade (3, 4).

The removable connection means (s1, s2, V) comprise surfaces (s1, s2) arranged on the connection portion (31, 41) of the blade (3, 4) and on the resistance arms (12, 22) of the levers which are coupled with each other by interference.

In addition to said removable connection means by interference, said removable connection means (s1, s2, V) also comprise two screws (V) that are inserted into two holes (f1) formed on the resistance arm (12, 22) of the levers and are engaged in two holes (f3) formed on the connection portion (31, 41) of the blade (3, 4).

The screws (V) are preferably self-tapping screws provided with a tip that threads the hole (f3) formed on the connection portion (31, 41) of the blade (3, 4) so as to be anchored to the blade.

Moreover, each screw (V) is sized in such a way that its tip is either flush or retracted with respect to the inner face (3a, 4a) of the blade (3, 4).

Lowered seats (k) are obtained on the outer face of each lever (1, 2), in coaxial position to the holes (f1), which are suitable for accommodating the heads of said screws (V).

Now with reference to Figs. 1, 2, 6 and 8, each lever (1, 2) comprises:
- an edge (14, 24) that is disposed on one side of the power arm (11, 21) and protrudes from an inner face (1a, 2a) of the lever (1, 2);
- a recess (15, 25) formed on the power arm (11, 21) on the side opposite the side provided with the edge (14, 24).

When the levers (1, 2) are in compact position, the recess (15) of the first lever (1) accommodates the edge (24) of the second lever (2), whereas the recess (25) of the second lever (2) accommodates the edge (14) of the first lever (1).

The edges (14, 24) act as stop means of the levers (1, 2) in compact position.

In addition, the edges (14, 24) act as abutting means for the end sections (72) of the torsion spring (70) of the elastic element (7). Otherwise said, one of said end sections (72) of the torsion spring abuts against the edge (14) of the first lever (1), whereas the other end section (72) of the torsion spring (70) abuts against the edge (24) of the second lever (2).

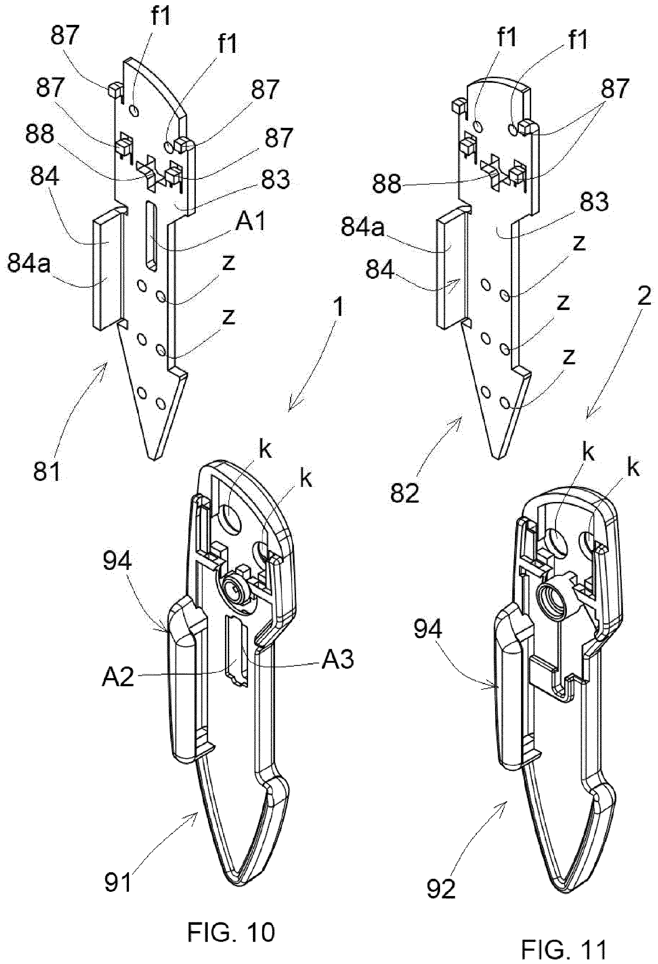

With reference to Figs. 10 and 11, in the preferred embodiment of the invention each lever (1, 2) comprises:
- a metal core (81, 82); and
- a case (91, 92), which is made of a plastic material and covers the metal core (81, 82) at least partially.

The metal core (81, 82) is drowned in the case (91, 92) of plastic material. The metal core (81, 82) and the case (91, 92) are co-molded. Specifically, in order to make each lever (1, 2), firstly the metal core (81, 82) is inserted into a mold and then plastic material is injected into the mold so that the plastic material adheres to the metal core (81, 82).

The metal core (81, 82) of each lever (1, 2) comprises:
- a plate (83) covered by the case (91, 92) of plastic material;
- a wing (84) protruding orthogonally from the plate (83);
- teeth (87) that protrude from the plate (83) and define a seat for the connection portion (31, 41) of the blade (3, 4);
- the holes (f1) for the screws (V) of the removable connection means aligned with the lowered seats (k) formed on the two bodies (91, 92) of plastic material;
- holes (z) suitable for being filled with the plastic material of the case (91; 92) to facilitate the coupling between the plate (83) and the case (91, 92);
- a cross-shaped hole (88) suitable for being crossed by the pin (5) and aligned with the low-relief seats (r1, r2) formed on the two bodies (91, 92) of plastic material and suitable for accommodating the heads of the screw (51) and of the bushing (52) of the pin (5).

With reference to Fig. 10, the metal core (81) of the first lever (1) also includes a slot (A1) suitable for forming the opening (A1, A2, A3) wherein the slider (61) slides together with an inner slot (A2) and an outer slot (A3) of the case (91) of the first lever (1).

The teeth (87) and the wing (84) of the metal core (81; 82) are not completely covered by the case (91, 92).

In particular, the teeth (87) have surfaces (s2) that are not covered by the case (91, 92) and are suitable for interfering with surfaces (s2) of an outer edge of the connection portion (31, 41) of the blade (3, 4). Said surfaces (s1, s2) of the connection portion (31, 41) of the blade (1, 2) and of the teeth (87) coincide with the surfaces (s1, s2) of the removable connection means (s1, s2, V).

In view of the above, the interference connection between the blade (3, 4) and the respective lever (1, 2) is obtained by means of the interference of metal surfaces, which is extremely reliable and robust.

Each case (91, 92) of plastic material comprises a cover portion (94) that partially covers the wing (84).

Together, the cover portion (94) and the wing (84) define the edge (14, 24) of the lever (1, 2).

The wing (84) of the metal core (81; 82) has a face (84a) that is not covered by the cover portion (94) and is in contact with the end section (72) of the torsion spring (70).

In view of the above, the torsion spring (70) acts on a metal surface and not on a plastic surface, making the device (100) stronger and more durable.

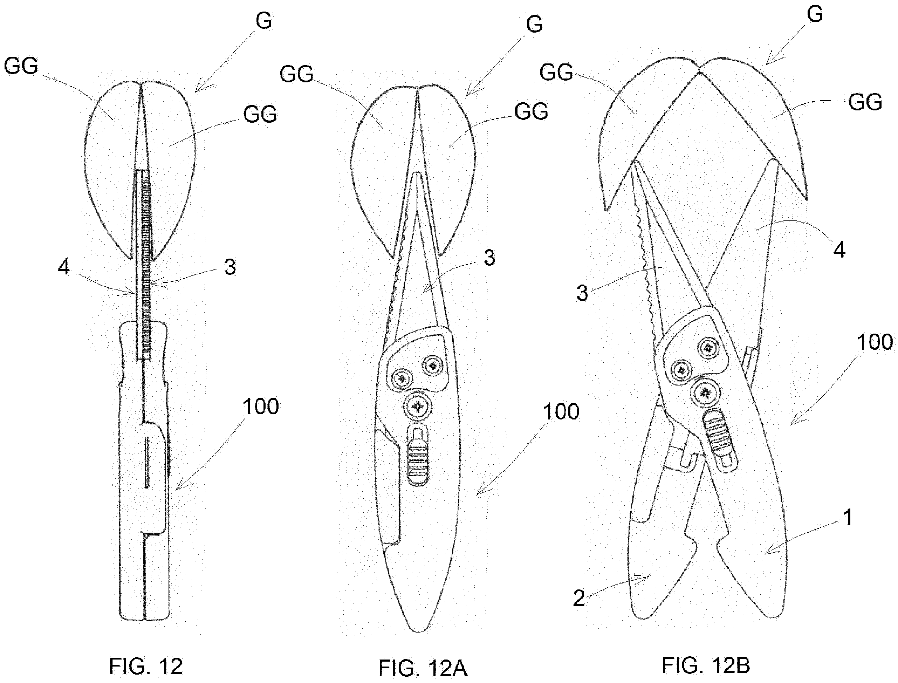

With reference to Figs. 12, 12A and 12B, during use, in order to open the shell (G) of a mollusk, a user holds the device (100), locking it in compact position, then inserts the blades (3, 4) joined together between the valves (GG) of the shell (G), as shown in Fig. 12. At this point the device (100) is rotated by 90° by the user so that the two valves (GG) of the shell (G) are detached from each other, as shown in Fig. 12A.

Finally, the user operates the slider (61) of the locking means (6) to release the levers (1, 2) in such a way that, under the pushing action of the elastic element (7), the levers (1, 2) are divaricated, moving the two blades (3, 4) apart, and the blades (3, 4) act on the valves (GG), completely opening the shell (G), as shown in Fig. 12B.

Following the above description, the advantages of the present invention appear evident.

Firstly, the new device (100) is effective, robust, reliable and practical to use.

In addition, the device (100) can be arranged in a space-saving compact position, wherein the levers (1, 2) and the blades (3, 4) are superimposed on each other, and the device (100) substantially takes the form of a knife that can be held by a user and can be used not only to open the shells (1, 2) but also to scale a fish or even to perform other processing operations on other foods, such as peeling carrots, potatoes and other vegetables.

Numerous variations and modifications of detail may be made to the present embodiment of the invention, within the reach of a person skilled in the art, but still within the scope of the invention as expressed by the appended claims.

## Claims

1. A multipurpose device (100) for the opening of shells and the processing of fish or other foods; said device (100) comprising:
- a first lever (1) and a second lever (2) hinged in a scissor-like manner with respect to a pin (5) having a hinging axis (X5) in such a manner that each lever (1, 2) has a power arm (11, 21) acting as a handle and a resistance arm (12, 22); wherein said levers (1, 2) may be disposed in a divaricated position in which said two levers (1, 2) are crossed;
- a first blade (3) connected to the resistance arm (12) of the first lever (1) and a second blade (4) connected to the resistance arm (22) of the second lever (2); wherein the two blades (3, 4) respectively lie on two parallel planes orthogonal to the hinging axis (X5); wherein the two blades (3, 4) are moved apart when the levers (1, 2) are in divaricated position; and
- an elastic element (7) disposed between the first lever (1) and the second lever (2), in such a way to constantly push the two levers (1, 2) into the divaricated position;
wherein the two levers (1, 2) lie on parallel planes orthogonal to the hinging axis (X5), in such a way to be disposed in a compact position wherein the two levers (1, 2) are superimposed on each other; and
wherein, when the two levers (1, 2) are in compact position and superimposed on each other, the two blades (3,4) are also superimposed on each other.

2. The device (100) according to claim 1, comprising locking means (6) conformed so as to lock the levers (1, 2) in the compact position.

3. The device (100) according to claim 2, wherein the locking means (6) comprise:
- a slider (61) slidably inserted into a through opening (A1; A2, A3) disposed on the first lever (1); said slider (61) comprises an actuation portion (611) protruding from an outer face (1b) of the first lever (1) and a tooth (612) protruding from an inner face (1a) of the first lever (1);
- a niche (62) disposed on an inner face (2a) of the second lever (2) wherein the tooth (612) of the slider (61) is suitable for being engaged or disengaged.

4. The device (100) according to any one of the preceding claims, comprising removable connection means (s1, s2, V) which are disposed between the blades (3, 4) and the resistance arms (12, 22) of the levers (1, 2) and which removably connect the blades (3, 4) to the resistance arms (12, 22); wherein each blade (3, 4) comprises a connection portion (31, 41) disposed on the resistance arm (12, 22) whereon said removable connection means (s1, s2, V) operate.

5. The device (100) according to claim 4, wherein said removable connection means (s1, s2, V) comprise surfaces (s1; s2) disposed on the connection portion (31, 41) of the blade (3, 4) and on the resistance arm (12, 22) of the levers (1, 2) that are coupled with each other by interference.

6. The device (100) according to claim 4 or 5, wherein said removable connection means (s1, s2, V) comprise screws (V) threaded into holes (f1) drilled on the resistance arm (12, 22) of the levers (1, 2) and engaged on holes (f3) drilled on the connection portion (31, 41) of the blade (3, 4); wherein each one of said screws (V) has a point that is flush or retracted with respect to an inner face (3a, 4a) of the blade (3, 4).

7. The device (100) according to any one of the preceding claims, wherein each blade (3, 4) comprises a tip (32, 42) that protrudes from the resistance arm (12, 22) of the lever (1, 2) and has two lateral borders (321, 322; 421, 422) that converge with each other, away from the resistance arm (12, 22).

8. The device (100) according to claim 7, wherein at least one lateral border (321) of the tip (32) of one of said blades (3) has a sawtooth profile.

9. The device (100) according to any one of the preceding claims, wherein each lever (1, 2) comprises:
- an edge (14, 24) which is disposed on one side of the power arm (11, 21) and which projects relative to an inner face (1a, 2a) of the lever (1, 2);
- a recess (15, 25) made on the power arm (11, 21) on the side opposite to the side where the edge (14, 24) is made;
wherein the recess (15) of the first lever (1) accommodates the edge (24) of the second lever (2) when the levers (1, 2) are in compact position;
wherein the recess (25) of the second lever (2) accommodates the edge (14) of the first lever (1) when the levers (1, 2) are in compact position.

10. The device (100) according to any one of the preceding claims, wherein said elastic element (7) comprises a torsion spring (70) comprising a central section (71) surrounding the pin (5) and two end sections (72) interfering against the two levers (1, 2).

11. The device (100) according to any one of the preceding claims, wherein each lever (1, 2) comprises:
- a metal core (81, 82); and
- a case (91, 92), which is made of plastic material, and which at least partially covers the metal core (81, 82).

12. The device (100) according to claim 11, when dependent on claims 9 and 10, wherein said metal core (81, 82) comprises a plate (83) covered by the plastic case (91, 92) and a wing (84) protruding orthogonally from the metal core (81, 82); wherein said plastic case (91, 92) comprises a cover portion (94) partially covering said wing (84); wherein said wing (84) and said cover portion (94) define said edge (14, 24) of the lever (1, 2); wherein an end section (72) of the torsion spring (7) is in contact with the wing (84).

13. The device (100) according to claim 11 or 12 when dependent on claim 5, wherein said metal core (81, 82) comprises teeth (87) protruding from the plate (83) and defining a seat for the connection portion (31, 41) of the blade (3, 4); wherein said surfaces (s1, s2) of the removable connection means (s1, s2, V) coincide with surfaces of said teeth (87) and with surfaces of an outer edge of the connection portion (31, 41).
